Europäisches Patentamt

European Patent Office

Office européen des brevets

(19)

(11) EP 0 574 288 B1

(12) **FASCICULE DE BREVET EUROPEEN**

(45) Date de publication et mention
de la délivrance du brevet:
**08.01.1997 Bulletin 1997/02**

(51) Int Cl.$^6$: **H04B 1/66**

(21) Numéro de dépôt: **93401390.5**

(22) Date de dépôt: **01.06.1993**

(54) **Procédé et dispositif de dissimulation d'erreurs de transmission de signaux audio-numériques codés par transformée fréquentielle**

Verfahren und Einrichtung zur Übertragungsfehlerverdeckung von mittels einer Frequenztransformation kodierten digitalen Audiosignalen

Method and apparatus for transmission error concealment of frequency transform coded digital audio signals

(84) Etats contractants désignés:
**DE GB**

(30) Priorité: **03.06.1992 FR 9206720**

(43) Date de publication de la demande:
**15.12.1993 Bulletin 1993/50**

(73) Titulaire: **FRANCE TELECOM**
**75015 Paris (FR)**

(72) Inventeur: **Mahieux, Yannick**
**F-22140 Begard (FR)**

(74) Mandataire: **Fréchède, Michel et al**
**Cabinet Plasseraud**
**84, rue d'Amsterdam**
**F-75440 Paris Cédex 09 (FR)**

(56) Documents cités:
**EP-A- 0 459 358**      **US-A- 4 837 617**

- **1989 INTERNATIONAL CONFERENCE ON ACOUSTICS, SPEECH AND SIGNAL PROCESSING vol. 3, 23 Mai 1989, NEW YORK pages 2021 - 2024 MAHIEUX ET AL 'TRANSFORM CODING OF AUDIO SIGNALS USING CORRELATION BETWEEN SUCCESSIVE TRANSFORM BLOCKS'**
- **IEEE INTERNATIONAL CONFERENCE ON COMMUNICATIONS vol. 2, 13 Juin 1982, NEW YORK pages 4H31 - 4H36 REININGER ET AL. 'SOFT DECISION DEMODULATION AND TRANSFORM CODING OF IMAGES'**
- **IEEE Transactions on Communications, Vol. COM-26.No 6, June 1978(NY) p.854-859. SUNDBERG:"Soft decision demodulation for PCM encoded speech signals"**

## Description

La présente invention est relative à un procédé et à un dispositif de dissimulation d'erreurs de transmission de signaux audio-numériques codés par transformée fréquentielle.

Dans les dispositifs actuels permettant d'effectuer la transmission de signaux audio-numériques, les codeurs utilisés procèdent par analyse fréquentielle du signal, formé par une suite d'échantillons $x(m,n)$ regroupés en blocs d'échantillons de rang successif m. Le résultat de cette analyse est codé et transmis, ou, le cas échéant, stocké suivant les applications. A la réception, ou à l'utilisation, un dispositif de synthèse permet de restituer le signal dans son domaine temporel de départ.

Les codeurs utilisés sont habituellement de deux types : codeurs en sous bandes ou codeurs par transformée. Ces deux types de codeurs sont basés sur le même principe, un codeur par transformée constituant en fait un codeur en sous bandes à grand nombre de sous-bandes. On notera d'ailleurs que lorsqu'une transformée de type TCDM est utilisée (MDCT, pour "modified discrete cosine transform"), une telle opération correspond en fait à la réécriture sous forme de transformée opérant par blocs des bancs de filtres utilisés dans les codeurs en sous bandes.

Une caractéristique commune aux codeurs précités est également qu'ils opèrent par blocs d'échantillons, ces blocs étant toutefois plus courts dans les codeurs en sous bandes que dans les codeurs par transformée. Ainsi, à chaque bloc de rang m, les coefficients résultant soit de la transformation soit de l'analyse en sous bande sont codés et transmis chacun selon un nombre de bits qui varie d'un bloc au suivant, selon un processus d'allocation dynamique de bits. Le décodeur, à la réception ou à l'utilisation, recalcule cette allocation ou la reçoit par l'intermédiaire d'un canal auxiliaire et reconstitue ainsi le jeu des coefficients quantifiés.

Bien que des systèmes de protection d'erreurs de codage soient prévus, lorsqu'une erreur affecte un mot de code des coefficients codés transmis ou mémorisés, c'est le spectre entier du signal qui peut ainsi être erronné. La différence par rapport au signal d'origine est très importante et la distorsion qui en résulte est très gênante au point de vue auditif. Dans ce but différents procédés de masquage des erreurs de transmission de signaux audionumériques ont été étudiés. Parmi ceux-ci on peut citer les travaux de M. Barberis et E. Schroeder "Burst error conceal ment for digital audio tape and broadcast application", AES Proceedings, 90th Convention, Paris 1991, Preprint 3012, pp 1-10. Selon le processus proposé, ces blocs d'échantillons affectés d'erreurs sont coupés de manière appropriée, en respectant la périodicité du signal. La durée du signal est de ce fait écourtée et il est donc nécessaire, pour compenser cette réduction temporelle, d'engendrer d'autres échantillons, en tenant compte de la périodicité du signal.

En outre, R. Veldhuis a proposé dans un ouvrage intitulé "Restoration of lost samples in digital signals", Prentice Hall, 1990, des techniques de restauration temporelles, basées sur des critères statistiques. Les deux méthodes précitées, dans l'application à la dissimulation d'erreurs de transmission doivent être appliquées aux échantillons décodés.

Enfin dans certaines méthodes proposées confer ISO/IEC/JTC1/SC2/WG11 "Coding of Moving Pictures and Associated Audio Information" MPEG Document 91, No. 101, août 1991, et "ATAC : Adaptive Transform Audio Coding" MPEG Document 89/208, Nov. 1989, le problème de la dissimulation d'erreurs a été évoqué, la répétition des coefficients du bloc précédent en cas de trame ou bloc erroné étant préconisée. Une telle solution, simple, n'est cependant pas adéquate car elle ne tient pas compte de l'évolution temporelle des coefficients de transformée.

La présente invention a au contraire pour objet un procédé et un dispositif de dissimulation d'erreurs de transmission de signaux audio-numériques tout à fait général, et pouvant donc s'appliquer tant aux codeurs en sous bandes qu'aux codeurs par transformée fréquentielle, quel que soit le type de transformation employé.

Un autre objet de la présente invention est également un procédé et un dispositif de dissimulation d'erreurs de transmission dans lesquels à tout coefficient $y(m,k)$ codé après analyse fréquentielle d'un signal de départ $x(m,n)$ sinusoïdal est associée la transformée de Fourier discrète TDF $Y(m,ko)$ d'une sinusoïde dont le module est constant pour tout bloc de rang m et dont la phase $\Psi(m,k)$ est une fonction linéaire du rang m du bloc d'échantillons considéré, chaque coefficient codé $y(m, k_o)$ étant considéré comme vérifiant une loi sinusoïdale du rang m du bloc considéré.

Le procédé et le dispositif de dissimulation d'erreurs de transmission de signaux audio-numériques codés par transformée fréquentielle objets de la présente invention, ces signaux étant constitués par une suite d'échantillons numériques $x(n)$ et le codage en coefficients codés $y(m,k)$ par domaines de fréquence de rang $(k)$ étant effectué par blocs de N échantillons soumis à une pondération $h(n)$, est remarquable en ce que, pour chaque bloc de rang m et chaque coefficient codé reçu $y'(m,k)$ correspondant, ceux-ci consistent à, respectivement permettent de, effectuer un traitement par transformée de Fourier discrète TFD de l'ensemble des échantillons $x(m,n)$ soumis à la pondération pour obtenir un coefficient de transformée de Fourier discrète $Y'(m,k)$ dans le domaine de fréquence de rang k correspondant et à moduler le module du coefficient de transformée de Fourier discrète $Y'(m,k)$ par une loi sinusoïdale du temps dont la phase est une fonction linéaire du rang m du bloc, ce qui permet de prédire, pour tout bloc d'échantillons de rang m+1 la valeur des coefficients codés pour déterminer des coefficients codés prédits correspondants $y'_p(m+l, k)$ à partir des blocs de rang antérieur, substituer, sur critère de détection d'erreurs, à chaque coefficient codé reçu $y'(m+1,k)$, pour lequel le critère d'erreurs est satisfait, le coefficient prédit $y'_p(m+l,k)$.

Le procédé et le dispositif de dissimulation d'erreurs de transmission de signaux audio-numériques codés par transformée fréquentielle objets de la présente invention trouvent application à la transmision et au stockage de signaux ou données audio-numériques, en particulier dans le domaine de l'industrie de la télévision, de la radiodiffusion, des phono- ou vidéo-grammes.

Une description plus détaillée du procédé et du dispositif de dissimulation d'erreurs de transmission de signaux audio-numériques codés par transformée fréquentielle objets de l'invention sera donnée ci-après en référence aux dessins dans lesquels :

- la figure 1a représente, de manière illustrative, les étapes de mise en oeuvre du procédé objet de l'invention,
- les figures 1b à 1d représentent différentes formes des coefficients codés reçus y'(m,k),
- la figure 1e représente, de manière illustrative, un détail de la mise en oeuvre du procédé illustré en figure 1a,
- la figure 2 représente un schéma synoptique général d'un dispositif de dissimulation d'erreurs de transmission de signaux audio-numériques codés par transformée fréquentielle,
- la figure 3a représente un schéma relatif à un premier mode de réalisation du dispositif représenté en figure 2,
- la figure 3b représente un détail de réalisation d'un circuit spécifique du mode de réalisation de la figure 3a,
- la figure 4a représente un schéma relatif à un deuxième mode de réalisation du dispositif représenté en figure 2,
- la figure 4b représente un schéma d'un détail de réalisation d'un circuit spécifique du mode de réalisation de la figure 4a,
- la figure 5 représente aux différents points a), b), c) différentes formes d'onde, sur 3 blocs ou trames, la forme d'onde supérieure, en chaque point, correspondant à un signal audio-numérique x(n) d'origine alors que la forme d'onde inférieure correspond au signal reconstruit dans lequel, pour le bloc central, m=1, les coefficients y'(m,k) ont été remplacés par les coeffificients prédits $y'_p(m,k)$.

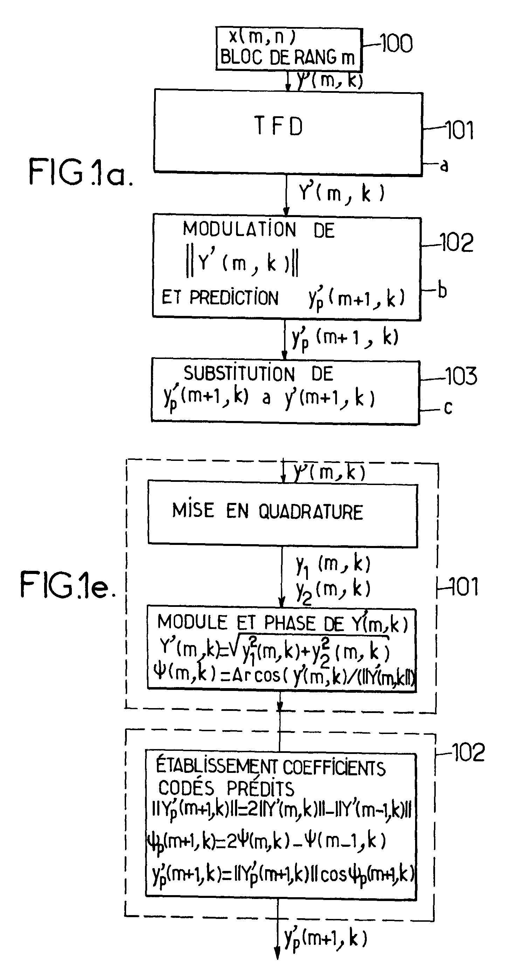

Une description plus détaillée du procédé et du dispositif objet de la présente invention sera donnée en liaison avec les figures 1a et 1b.

En premier lieu, on rappelle que les signaux audio-numériques concernés sont constitués par une suite d'échantillons numériques x(n) ces signaux étant codés en coefficients codés notés y(m,k) par transformée fréquentielle. Ainsi, ce codage est effectué par domaine de fréquence de rang k, ce codage étant effectué par blocs de N échantillons soumis à une pondération h(n). Après codage par transformée fréquentielle, les coefficients codés y(m,k) sont à nouveau codés par un processus classique pour transmission. Par convention, on indique que pour chaque bloc de rang m les informations transmises correspondent à des coefficients codés pour transmission notés Cy(m,k), ces coefficients codés étant reçus au niveau d'un décodeur sous la forme de coefficients codés notés Cy'(m,k), l'annotation y'(m,k) indiquant les altérations possibles des coefficients codés correspondants en raison du codage pour la transmission précitée.

Les coefficients codés pour transmission Cy'(m,k) sont alors décodés au niveau du décodeur et permettent d'obtenir pour chaque bloc de rang m les coefficients codés reçus y'(m,k) correspondants.

Ainsi qu'on l'a représenté en figure 1a, le procédé objet de la présente invention consiste alors à partir des échantillons x(m,n), par l'intermédiaire des coefficients codés reçus y'(m,k) pour chaque bloc de rang m, à partir d'une étape 100, à effectuer un traitement 101 par transformée de Fourier discrète (TFD) pour obtenir un coefficient de transformée de Fourier discrète Y'(m,k) dans le domaine de fréquence de rang k correspondant. Le coefficient de TFD Y'(m,k) est bien entendu obtenu à partir du coefficient codé reçu correspondant y'(m,k).

L'étape de traitement par transformée de Fourier discrète est suivie d'une étape consistant à moduler le module du coefficien TFD Y'(m,k) par une loi sinusoïdale du temps dont la phase est une fonction linéaire du rang m du bloc considéré. Une telle opération permet de prédire pour tout bloc d'échantillons de rang m+1 la valeur des coefficients codés pour déterminer des coefficients codés prédits correspondants, notés $y'_p(m+1,k)$, à partir des blocs de rang antérieur.

L'étape b référencée 102 précitée est alors suivie d'une étape c référencée 103 laquelle consiste à substituer, sur critère de détection d'erreurs, ce critère de détection d'erreurs pouvant être réalisé selon les procédés classiques de détection d'erreurs au niveau des décodeurs actuellement utilisés, le coefficient prédit $y'_p(m+1,k)$ à chaque coefficient codé reçu y'(m+1,k) correspondant.

Un justificatif de la mise en oeuvre du procédé de la présente invention peut être donné de la manière ci-après.

Dans le cas non limitatif où les coefficients codés y'(m,k) reçus ont été codés par transformée fréquentielle de type MDCT ou tranformée en cosinus discrète modifiée, chaque coefficient codé reçu y'(m,k) vérifie la relation :

$$y'(m,k) = \sum_{n=0}^{N-1} x(m,n).h(n).\cos\left(2\pi(2k+1)(2n+1)/(4N)+(2k+1)\pi/4\right)$$

On rappelle que dans cette relation y'(m,k) désigne les coefficients codés reçus après transformée fréquentielle et h(n) désigne la fenêtre de pondération des échantillons x(m,n), m désignant le rang du bloc correspondant. En outre N désigne la taille du bloc de transformée et peut être pris égal à une puissance de 2 comprise entre 256 et 2048.

Le procédé objet de la présente invention est basé sur l'observation suivante selon laquelle chaque coefficient codé reçu y'(m,k) peut alors être réécrit sous la forme ci-après :

$$y'(m,k) = \|Y'(m,k)\| \cdot \cos(\Psi(Y'(m,k)) - 0,5.\pi.(k+1/2).(N+2)/N)$$

Dans cette relation on note que Y'(m,k) est la transformée de Fourier discrète ou TFD du produit h(n).x(m,n) évalué en k+1/2 et le coefficient de transformation Y'(m,k) s'écrit :

$$Y'(m,k) = \sum_{n=0}^{N-1} h(n).x(m,n).e^{-j2\pi(k+1/2)/N}$$

Bien entendu, la transformée de Fourier discrète TFD est ainsi effectuée sur l'ensemble des échantillons x (m,n) de chaque bloc de rang m par l'intermédiaire des coefficients codés reçus y'(m,k).

Pour une fréquence d'échantillonage Fe des échantillons précitée, et pour un signal de départ x(m,n) constitué par une sinusoïde de pulsation $\omega$ correspondant au coefficient numéro k0 soit pour :

$$2\pi.k0Fe/N < \omega < 2\pi.(k0+1)Fe/N$$

alors Y'(m,k0) est le coefficient de TFD d'une sinusoïde.

Le module IIY'(m,k0)II du coefficient de TFD Y(m,k0) est alors constant pour tout bloc de rang m et la phase $\Psi(Y'(m,k0))$ est alors une fonction linéaire du rang m du bloc. Pour une étude théorique de la propriété précitée on pourra se reporter à la publication de Y. Mahieux, A. Charbonnier et J.P. Petit "Transform coding using correlation between successive blocs", IEEE Proceedings ICASSP 1989, Glasgow, pp 2021-2024.

On constate donc que chaque coefficient codé reçu y'(m,k0) évolue donc comme une sinusoïde en fonction du rang m de chaque bloc.

Le procédé objet de la présente invention repose sur la propriété précédemment mentionnée. En effet, les signaux sonores étant composés d'harmoniques, c'est-à-dire en fait de sinusoïdes élémentaires, il est donc possible pour tout bloc de rang m+1 de prédire la valeur des coefficients y'(m+1,k) codés reçus correspondant aux fréquences de ces harmoniques à partir des coefficients des blocs précédents de rang m, m-1.

Ainsi, lorsque le train de données binaires correspondant aux coefficients codés reçus est affecté d'erreurs, aux coefficients codés y'(m,k) sont substitués les coefficients prédits $y'_p(m,k)$.

On notera d'une première part que le procédé objet de la présente invention peut être mis en oeuvre pour la transformée fréquentielle TCDM ou par exemple pour une autre transformation, la transformée en cosinus discrète, ou même dans le cas où un codeur en sous bande est utilisé.

Bien entendu, le procédé objet de la présente invention permet d'obtenir un fonctionnement satisfaisant lorsque le bloc de coefficients codés y'(m,k) à remplacer se trouve dans une zone suffisamment stationnaire du signal audio numérique pour que la prédiction soit valide.

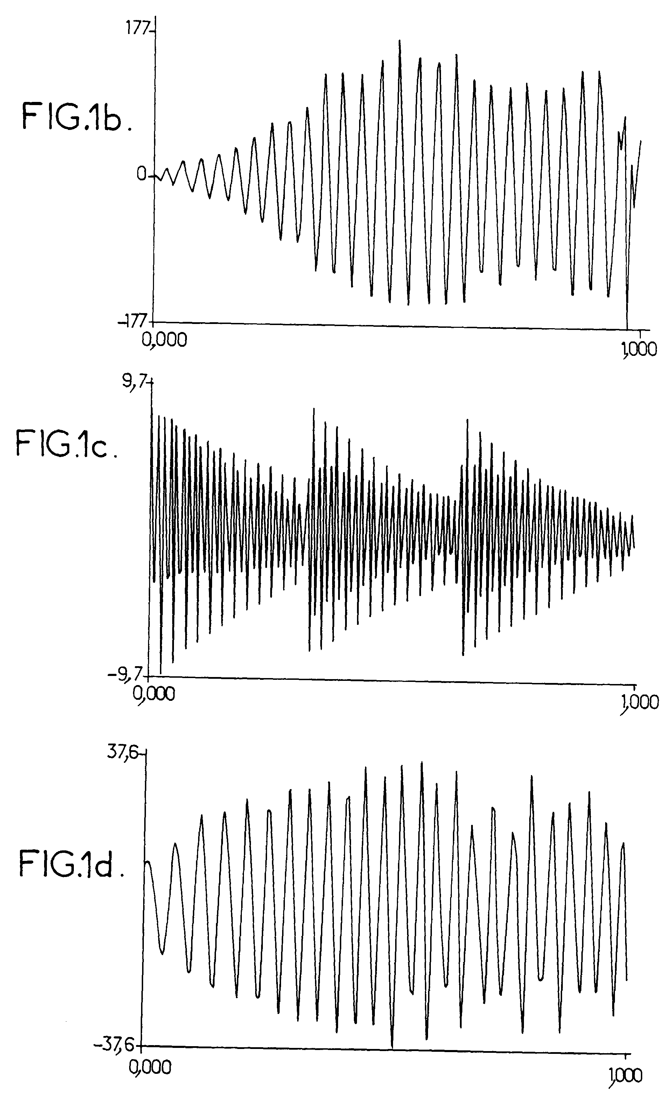

Les figures 1b, 1c, 1d représentent quelques exemples d'évolution temporelle des coefficients codés reçus y'(m, k) dans le cas respectivement d'une séquence de violon, d'une séquence de vibraphone et d'une séquence de flûte. Les coefficients correspondants sont les coefficients codés y'(m,6), y'(m,20) et y'(m,8). On note que le critère de stationnarité est vérifié même pour des durées assez longues.

Un mode de réalisation particulièrement avantageux, non limitatif du traitement par TFD des coefficients y'(m,k) codés reçus et des étapes de modulation et de prédiction mises en oeuvre par le procédé objet de la présente invention sera maintenant donné en liaison avec la figure le.

On rappelle que le signal x(m,n) de départ est considéré comme constitué par une pluralité de sinusoïdes élémentaires. L'étape b référencée 102 sur la figure la consistant à moduler le module du coefficient de transformée de Fourier discrète Y'(m,k) constant pour tout bloc de rang m, est alors réalisée à partir des coefficients codés reçus y'(m,k) et consiste successivement, ainsi que représenté sur la figure le précitée, à effectuer une mise en quadrature des coefficients codés reçus y'(m,k) pour obtenir deux signaux en quadrature notés respectivement

$$- y1(m,k) = \|Y'(m,k)\| \cos(\psi(m,k)+\chi)$$

$$- y2(m,k) = \|Y'(m,k)\| \sin(\psi(m,k)+\chi)$$

Dans les relations précitées : $\|Y'(m,k)\|$ représente le module du coefficient de transformée de Fourier discrète de chaque coefficient codé reçu y'(m,k) soit le module du coefficient de TFD Y'(m,k),

- $\psi(m,k)$ représente l'argument de phase du coefficient de TFD Y'(m,k),
- $\chi$ représente la contribution de phase de l'étape de mise en quadrature.

Suite à l'étape de mise en quadrature citée est alors effectuée une étape consistant à établir le module et la phase de chaque coefficient de TFD Y'(m,k) à partir des relations :

$$\|Y'(m,k)\| = \sqrt{y_1^2(m,k) + y_2^2(m,k)}$$

$$\Psi(m,k) = Arcos(y'(m,k)/(\|Y'(m,k)\|)).$$

Les valeurs des coefficients codés prédits $y'_p(m+1,k)$ sont alors établies à partir des valeurs correspondantes des blocs des rangs antérieurs et des relations :

$$\left\| Y'_p(m+1,k) \right\| = 2 \left\| Y'(m,k) \right\| - \left\| Y'(m-1,k) \right\|$$

$$\Psi_p(m+1,k) = 2\Psi(m,k) - \Psi(m-1,k)$$

avec

$$y'_p(m+1,k) = \left\| Y'_p(m+1,k) \right\| \cos(\psi_p(m+1,k)).$$

On notera que les relations précédentes donnant les valeurs du module et de la phase des coefficients prédits suppose une évolution linéaire de ces entités, les relations précédentes ou relations de prédiction pouvant être remplacées par des relations de prédiction plus complexes.

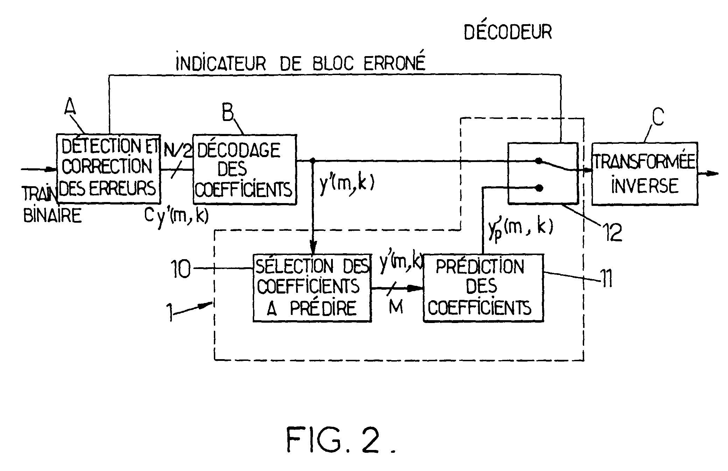

Une description plus détaillée d'un dispositif de dissimulation d'erreurs de transmission de signaux audio numériques codés par codage fréquentiel objet de la présente invention sera maintenant donnée en liaison avec la figure 2 et suivantes.

Sur la figure 2 on a représenté en fait le dispositif objet de la présente invention, lequel est avantageusement intégré à un décodeur de type classique. Le décodeur comprend ainsi que représenté sur la figure 2 précitée un circuit de détection et correction des erreurs noté A recevant le train binaire des coefficients codés transmis après transformée fréquentielle et après codage pour transmission, ces coefficients étant notés Cy'(m,k), un circuit de décodage des coefficients recevant les coefficients codés transmis Cy'(m,k) et délivrant les coefficients codés reçus y'(m,k). On notera bien sûr que le circuit de détection et de correction des erreurs A délivre un signal indicateur de bloc erroné, les coefficients codés reçus y'(m,k) étant normalement dans les décodeurs de type classique délivrés à un circuit de transformée inverse noté C, lequel a pour fonction à partir des coefficients précités y'(m,k) de restituer les échantillons correspondants. L'ensemble des circuits A, B, C ne sera pas décrit plus en détail car il correspond à la structure même d'un décodeur de type classique.

Ainsi que représenté en figure 2, le dispositif de dissimulation d'erreurs de transmission objet de l'invention comporte au moins au niveau du décodeur un circuit 11 de calcul des coefficients codés prédits $y'_p(m+1,k)$ pour tout bloc d'échantillons de rang m+1 à partir des bloc de rang antérieur y'(m,k). Toutefois on notera que le circuit 11 de calcul des coefficients codés prédits est branché en parallèle entre la liaison entre le circuit B de décodage des coefficients et le circuit de transformées inverse C par l'intermédiaire d'un circuit 10 de sélection des coefficients y'(m,k) codés reçus à prédire.

On notera que d'une manière générale le circuit 10 de sélection des coefficients à prédire peut être constitué simplement par une double mémoire d'entrée permettant de recevoir respectivement les coefficients codés reçus y'(m,k) de rang pair, m = 2r, respectivement de rang impair, m = 2r+1, en lecture respectivement écriture. Ainsi, les coefficients codés reçus y'(m,k) sont successivement délivrés au circuit 11 de prédiction des coefficients par lecture alternative des deux mémoires d'entrée du circuit 10 de sélection des coefficients à prédire avec un retard d'un bloc de coefficients.

En outre, le dispositif 1 de dissimulation d'erreurs objet de l'invention comprend un circuit 12 commutateur conditionnel placé en série entre le circuit B de décodage des coefficients et le circuit C de transformée inverse. Le circuit 12 commutateur reçoit, d'une part, sur une première entrée de commutation les coefficients codés reçus y'(m,k) et sur une deuxième entrée de commutation les coefficients prédits $y'_p(m+1,k)$. Il reçoit, d'autre part, sur une entrée de commande de commutation le signal de commande de commutation, indicateur du bloc erroné, délivré par le module de détection d'erreurs, ce qui permet de substituer sur critère de détection d'erreurs à chaque coefficient codé reçu y'(m+1,k) pour lequel le critère d'erreur est satisfait, le coefficient prédit $y'_p(m+1,k)$. La restitution des échantillons par le circuit C de transformée inverse est alors effectuée dans des conditions identiques à celles du fonctionnement normal du décodeur, sur la base toutefois des coefficients codés reçus y'(m+1,k) ou des coefficients substitués, les coefficients prédits $y'_p(m+1,k)$.

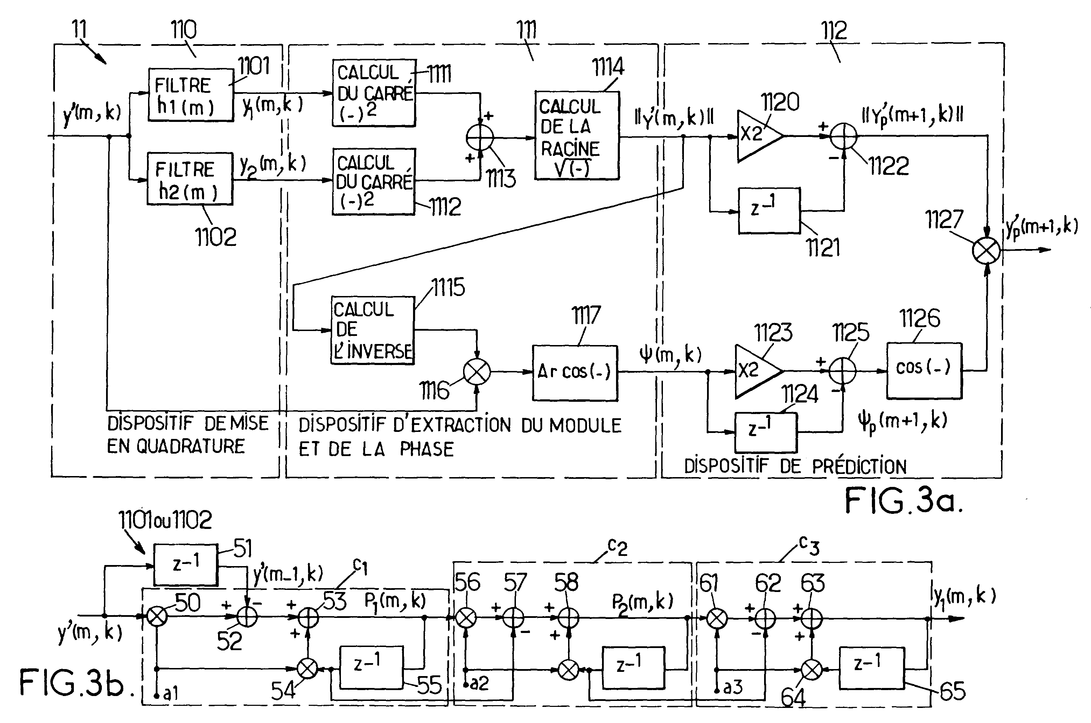

Une description plus détaillée du circuit 11 de calcul des coefficients codés prédits $y'_p(m+1,k)$ sera donnée en liaison avec les figures 3a et 3b.

Selon la figure 3a précitée, le circuit 11 comprend un premier circuit 110 de mise en quadrature des coefficients codés reçus y'(m,k). Ce circuit délivre un premier y1(m,k) et un deuxième y2(m,k) signal en quadrature vérifiant la relation précédemment donnée dans la description.

En outre, un circuit 111 de calcul du module IIY'(m,k)II et de la phase $\psi(m,k)$ du coefficient de transformée TFD Y'(m,k) suivi d'un circuit 112 de calcul du coefficient codé prédit $y'_p(m+1,k)$ lequel reçoit le module IIY'(m,k)II et la phase $\psi(m,k)$ du coefficient de transformée Y'(m,k) délivré par le circuit 111 précédent. Le circuit 112 délivre le coefficient codé prédit $y'_p(m+1,k)$ vérifiant la relation précédemment donnée dans la description.

Ainsi qu'on l'a en outre représenté sur la figure 3b, le circuit 110 de mise en quadrature comprend un premier noté 1101 et un deuxième noté 1102 filtres en parallèle, chaque filtre précité formant un filtre de type passe tout. Le filtre 1101 et le filtre 1102 délivrent le premier y1(m,k) respectivement le deuxième y2(m,k) signal en quadrature. Les deux filtres passe tout 1101, 1102 sont des filtres déphaseurs de réponse impulsionnelle h1(m) et h2(m). Ces filtres sont calculés de façon à assurer un déphasage de 90° entre les signaux en quadrature dans la plus grande gamme de fréquence possible. Les signaux en quadrature y1(m,k) et y2(m,k) sont alors obtenus à l'aide des relations ci-après :

$$P_1(m,k) = a_1 y'(m,k) - y'(m-1,k) + a_1 P_1(m-1,k)$$

$$P_2(m,k) = a_2 P_1(m,k) - P_1(m-1,k) + a_2 P_2(m-1,k)$$

$$P_3(m,k) = a_3 P_2(m,k) - P_2(m-1,k) + a_3 P_3(m-1,k)$$

$$y_1(m,k) = P_3(m,k).$$

Sur la figure 3b on a représenté un mode de réalisation du filtre 1101 par exemple permettant la mise en oeuvre des relations précitées et en conséquence l'obtention du premier signal en quadrature y1(m,k).

A cet effet, le filtre 1101 comprend un circuit multiplicateur 50 recevant en entrée les coefficients codés reçus y'(m,k) et un coefficient de pondération a1, un circuit soustracteur 52 recevant le résultat de la multiplication délivré par le multiplicateur 50 et le coefficient codé antérieur y'(m-1,k) délivré par un circuit retardateur 51. D'une manière générale on remarquera que chaque circuit retardateur noté $z^{-1}$ permet de délivrer chaque coefficient codé retardé d'une durée d'un bloc c'est à dire, le coefficient codé reçu de rang antérieur m-1 pour tout coefficient codé reçu de rang m courant. Le soustracteur 52 est suivi d'un additionneur 53, lequel reçoit sur ses entrées le coefficient a1 multiplié par le signal de sortie délivré par l'additionneur 53 retardé d'une durée de bloc par un retardateur 55 par l'intermédiaire d'un multiplicateur 54. La valeur en sortie de l'additionneur 53 est notée P1(m,k).

On notera que le multiplicateur 50, le soustracteur 52, l'additionneur 53, le multiplicateur 54 et le circuit retardateur 55 forment une première cellule de calcul notée c1, laquelle permet de délivrer le produit P1(m,k).

Une deuxième cellule de calcul c2 de structure analogue à la cellule de calcul c1 est formée par un multiplicateur 56, un soustracteur 57, un additionneur 58, un multiplicateur 59 et une cellule de retard 60. On note que le multiplicateur 56 reçoit sur une entrée le produit P1(m,k) délivré par la cellule de calcul c1 et, sur une autre entrée, un coefficient a2, la cellule de calcul c2 délivrant un deuxième produit P2(m,k).

Enfin, une troisième cellule de calcul c3 présente une structure analogue aux deux premières c1 et c2 et est formée par un multiplicateur 61, un soustracteur 62, un sommateur 63, um multiplicateur 64 et un circuit de retard 65. On notera que la deuxième cellule de calcul c2, en particulier l'entrée négative du soustracteur 57 reçoit le signal délivré par le retardateur 55 de la première cellule ce calcul c1 et, de manière analogue, pour la cellule de calcul c3, en particulier le circuit soustracteur 62, lequel reçoit le signal délivré par le circuit retardateur 60 de la deuxième cellule de calcul c2. Ainsi le soustracteur 57 de la deuxième cellule de calcul c2 reçoit sur son entrée négative le produit P1(m-1,k) délivré par le circuit retardateur 55 alors que le circuit soustracteur 62 de la cellule de calcul c3 reçoit le produit P2(m-1,k) délivré par le circuit retardateur 60 de la deuxième cellule de calcul c2, la troisième cellule de calcul c3 délivrant ainsi le premier signal en quadrature y1(m,k).

En ce qui concerne le deuxième circuit de filtrage 1102, celui-ci est analogue au circuit de filtrage 1101 représenté en figure 3b, les coefficients a1, a2, a3 étant remplacés par les coefficients b1, b2, b3 et les produits P1(m,k), P2(m,k) et P3(m,k) étant remplacés par les produits correspondants Q1(m,k), Q2(m,k) et Q3(m,k).

A titre d'exemple non limitatif les coefficients a1, a2, a3 et b1, b2, b3 peuvent prendre des valeurs :

a1 = 0,953, a2 = 0,322, a3 = -0,788
b1 = 0,956, b2 = -0,348, b3 = 0,777.

En ce qui concerne le circuit 111 d'extraction du module et de la phase, on notera que celui-ci comporte un premier 1111 et un deuxième 1112 circuit de calcul du carré des signaux en quadrature y1(m,k) et y2(m,k), un circuit sommateur 1113 recevant les valeurs des carrés des signaux précités délivrés par les circuits de calcul 1111, 1112, un circuit de calcul de la racine 1114 recevant la somme des carrés délivrés par le circuit sommateur 1113, le circuit de calcul de la racine 1114 délivrant ainsi le module IIY'(m,k)II du coefficient de TFD Y'(m,k).

En outre un circuit 1115 de calcul de l'inverse du module délivré par le circuit 1114 est prévu ainsi qu'un circuit multiplicateur 1116, lequel reçoit le coefficient codé reçu y'(m,k) et la valeur de l'inverse du module délivrée par le circuit 1115. Le circuit multiplicateur 1116 délivre le rapport y'(m,k)/IIY'(m,k)II. Un circuit 1117 reçoit le produit délivré par le multiplicateur 1116 et délivre l'argument de phase $\Psi$(m,k). Le circuit 1117 peut être constitué par une mémoire de type table de consultation par exemple, alors que les circuits 1111, 1112, 1113, 1114, 1115 et 1116 sont constitués par des circuits correspondants de type classique.

Enfin, le circuit 112 du calcul du coefficient de calcul codé prédit comporte ainsi que représenté en figure 3a deux cellules de calcul identiques comprenant un circuit multiplicateur par deux 1120, un circuit soustracteur 1122 et un circuit retardateur 1121 délivrant sur l'entrée négative du soustracteur 1122 le module du coefficient de TFD également délivré en entrée du multiplicateur par deux 1120, respectivement un circuit multiplicateur par deux 1123, un circuit soustracteur 1125 et un circuit retardateur 1124 délivrant à l'entrée négative du circuit soustracteur 1125 l'argument de phase $\Psi$(m-1,k), l'argument de phase $\Psi$(m,k) étant également délivré au multiplicateur par deux 1123. Le soustracteur 1122 délivre ainsi le module du coefficient prédit IIY'$_p$(m+1,k)II alors que le soustracteur 1125 délivre l'argument de phase $\Psi_p$(m+1,k) du coefficient prédit y'$_p$(m+1,k). Un circuit de type mémoire adressable 1126 reçoit l'argument précité, ce circuit de type table de consultation permettant de délivrer la valeur cosinus de cet argument. Un circuit multiplicateur 1127 reçoit d'une part le module IIY'$_p$(m+1,k)II et d'autre part la valeur cosinus de l'argument précité délivrée par le circuit 1126 et délivre la valeur du coefficient codé prédit y'$_p$(m+1,k).

On notera que le mode de réalisation tel que représenté en figures 3a et 3b permet ainsi d'effectuer la fonction de prédiction des coefficients codés précédemment mentionnés.

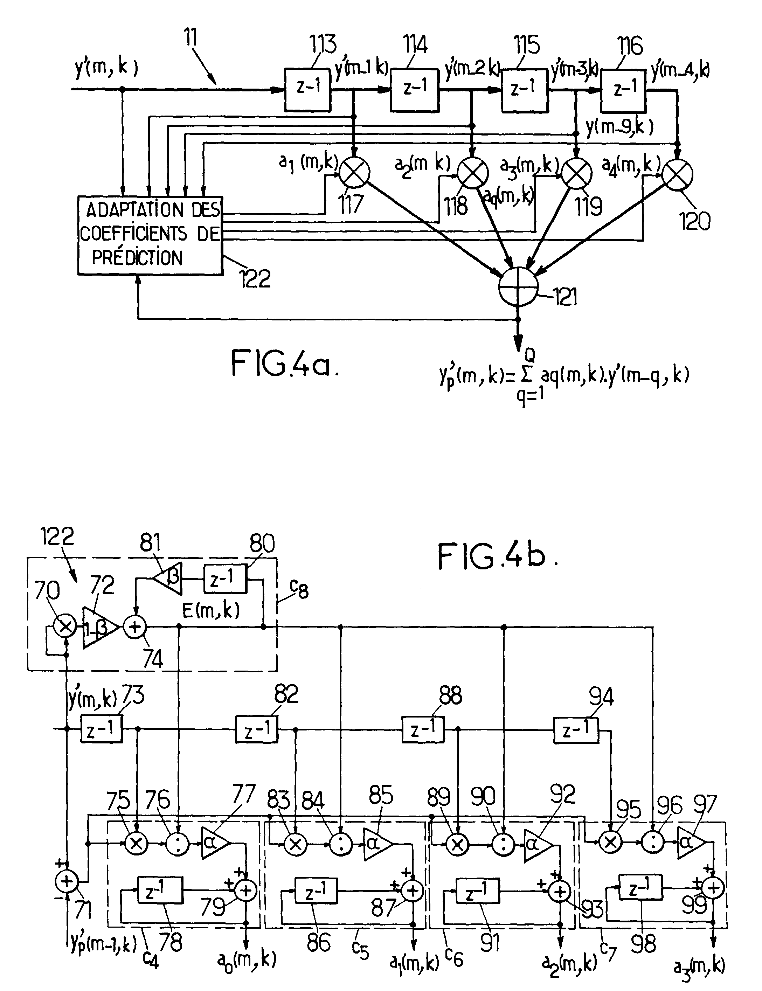

On notera que le mode de réalisation décrit en figure 3a peut présenter l'inconvénient d'être relativement complexe et de nécessiter des calculs coûteux en temps d'exécution tels que les fonctions racines carrées, arcos, cos par exemple. Bien entendu les circuits de calcul précités peuvent éventuellement être remplacés par des tables de consultation à accès plus rapide. Cependant on préférera un deuxième mode de réalisation consistant en un dispositif de prédiction directe des coefficients de transformée, lequel sera décrit ci-après en liason avec les figures 4a et 4b.

Selon la figure 4a précitée, le circuit 11 de calcul des coefficients codés prédits peut avantageusement être formé par une boucle de prédiction adaptative des coefficients, cette boucle permettant de prédire pour tout bloc d'échantillon de rang m+1, c'est à dire en fait pour tout bloc de coefficient codé reçu y'(m,k) correspondant, la valeur des coefficients codés prédits correspondants y'$_p$(m+1,k) à partir des blocs de rang antérieur et des coefficients codés reçus y'(m,k), y'(m-1,k), y'(m-2,k) par exemple.

Ainsi qu'on l'a en outre représenté sur la figure 4a, la boucle de prédiction adaptative comporte une pluralité de Q cellules de retard notées 113, 114, 115, 116 sur cette figure, connectées en cascade. La première cellule amont 113 reçoit les coefficients codés reçus y'(m,k) chaque cellule de retard successive délivrant les coefficients y'(m-1,k), y'(m-2,k), y'(m-3,k) et y'(m-4,k) de rang antérieur correspondant. On comprend bien sur que les cellules de retard, notées z$^{-1}$, permettent d'introduire un retard d'une durée de transmission de bloc afin de délivrer en fait pour tout bloc ou tout coefficient codé reçu y'(m,k) entrant au niveau de la cellule amont 113, les coefficients codés de rang antérieur m-1, m-2, m-3 puis m-4 correspondants.

En outre, ainsi qu'on l'a représenté sur cette même figure 4a, une pluralité de Q circuits multiplicateurs est prévue, ces circuits étant notés 117, 118, 119 et 120. Chaque circuit multiplicateur précité a une entrée connectée à la sortie correspondante d'une cellule de retard et reçoit le coefficient y'(m-q) correspondant. Une autre entrée de chaque circuit multiplicateur reçoit une valeur de multiplicande notée $a_q(m,k)$ correspondante et constituant un coefficient de prédiction.

En outre, un circuit sommateur 121 est prévu lequel reçoit sur Q entrées les produits correspondants $a_q(m,k).y'(m-q)$ et délivre le coefficient codé prédit

$$y'_P(m+1,k) = \sum_{q=1}^{Q} a_q(m,k).y'(m-q,k).$$

Un circuit 122 d'adaptation des coefficients de prédiction $a_q(m,k)$ est prévu, celui-ci recevant, d'une part, les coefficients codés reçus y'(m,k) et d'autre part les coefficients codés reçus antérieurs y'(m-q,k) délivrés par chaque cellule de retard précitée ainsi que, d'autre part, le coefficient codé prédit $y'_p(m+1,k)$. Le circuit 112 délivre des coefficients de prédiction $a_q(m,k)$ aux circuits multiplicateurs 117 à 120 précités. On notera que les coefficients de prédiction $a_q(m,k)$ sont calculés sur critère de gradient normalisé par exemple.

Dans le mode préférentiel de réalisation représenté en figure 4a on notera que le dispositif objet de la présente invention tel que représenté en figure 2 peut alors comporter un circuit 10 de sélection des coefficients à prédire de type particulier. Le circuit 10 reçoit en fait en entrée les N/2 coefficients codés reçus y'(m,k). Ce circuit pouvant présenter l'architecture précédemment mentionnée consistant en deux mémoires d'entrées fonctionnant alternativement en lecture et en écriture peut en outre comprendre un bloc de sélection des coefficients dont la prédiction doit être effectuée. A titre d'exemple non limitatif on indiquera que la sélection peut être effectuée sur un critère d'énergie, lequel sera décrit ultérieurement dans la description.

Ainsi, le fonctionnement du dispositif tel que représenté en figure 2 dans le deuxième mode de réalisation préférentiel peut il être réalisé de la façon ci-après. Les circuits 10 de sélection des coefficients à prédire et avant tout le circuit 11 de prédiction des coefficient constituent un prédicteur auto-régressif d'ordre Q dont on adapte les coefficients $\{a_q(m,k), q = 0,..., Q-1\}$.

Compte tenu du fait que l'évolution des coefficients codés reçus y'(m,k) est sinusoïdale, notamment lorsque le signal de départ est lui-même une sinusoïde, un prédicteur d'ordre 2 peut être suffisant.

Toutefois les harmoniques de signaux réels sont rarement purement sinusoïdaux. A tout le moins, leur module varie en fonction du temps, ces modules étant sujets à amortissement par exemple. Un ordre de prédiction plus élevé peut être nécessaire et il est alors avantageux par exemple d'utiliser un ordre de prédiction Q = 4.

La valeur codée prédite $y'_p(m,k0)$ est alors :

$$y'_p(m,k_0) = a_0((m,k_0).y'(m-1,k_0)+a_1(m,k_0),y'(m-2,k_0)+a_2(m,k_0).y'(m-3,k_0)+a_3(m,k_0).y'(m-4,k_0).$$

Dans le cas où les coefficients codés reçus du bloc de rang m sont faux, ils sont remplacés par les coefficients prédits ainsi que décrit précédemment à l'entrée du circuit de transformée inverse ainsi qu'à l'entrée du circuit de prédiction des coefficients 11.

L'adaptation des coefficients de prédiction $a_q$ peut être réalisée selon la loi du gradient normalisé au moyen d'un circuit tel que représenté en figure 4b.

Chaque coefficient de prédiction $a_q(m+1,k0)$ vérifie la relation :

$$a_q(m+1,k_0)=a_q(m,k_0)+\alpha.(y'(m'k_0)-y_p(m,k_0)).y'(m-q,k_0)/E(m,k_0) \quad q = 0,..., Q-1.$$

Dans la relation précitée la constante $\alpha$ peut être choisie à une valeur déterminée, par exemple $\alpha = 0,1$ ou peut prendre deux valeur possibles ainsi qu'il sera décrit ci-après dans la description. L'entité $E(m,k_0)$ est l'énergie du coefficient codé reçu $y'(m,k_0)$.

Une estimation possible de cette entité est donnée par l'équation récursive ci-après :

$$E(m,k_0) = \beta.E(m-1k_0) + (1-\beta).y'^2(m-1,k_0).$$

Dans cette dernière relation $\beta$ est une constante de module inférieure à 1($\beta = 0,8$ par exemple).

Ainsi qu'on l'a représenté sur la figure 4b, les différentes valeurs de coefficients de prédiction $a_q(m+1,k_0)$ sont obtenues au moyen du circuit précité. Celui-ci comprend une cascade de Q = 4 cellules de retard notées 73, 82, 88 et 94 recevant les coefficients codés reçus y'(m,k) et délivrant chacune les coefficients codés reçus antérieurs y'(m-1,k), y'(m-2,k), y'(m-3,k) et y'(m-4,k).

Le circuit représenté en figure 4b permettant la mise en oeuvre de la loi du gradient comprend en outre Q cellules de calcul avec Q = 4 notées c4, c5, c6 et c7. Chaque cellule est formée par un circuit multiplicateur d'entrée 75, 83, 89, 95, un circuit diviseur 76, 84, 90 et 96, un amplificateur de gain $\alpha$ 77, 85, 92, 97, un circuit sommateur 79, 87, 93, 99 et une boucle comportant un élément de retard d'une durée de transmission d'un bloc élément de retard bouclé entre la sortie de chaque sommateur et une entrée de celui-ci, sommateurs notés 79, 87, 93, 99. Chaque multiplicateur d'entrée 75, 83, 89, 95 reçoit, d'une part, la différence entre le coefficient codé reçu y'(m,k) et le coefficient codé prédit antérieur $y'_p(m-1,k)$ délivré par un soustracteur d'entrée 71, et, d'autre part, respectivement le coefficient codé reçu y'(m-1,k) à y'(m-4,k) délivré par chaque cellule de retard 73, 82, 88 et 94. Chaque diviseur d'entrée 76, 84, 90 et 96 reçoit l'entité E(m,k) représentative de l'énergie du coefficient y'(m,k) du coefficient codé reçu correspondant. Cette entité E(m,k) est calculée par une cellule de calcul notée c8, laquelle comprend un multiplicateur 70 permettant d'obtenir le carré de la valeur du coefficient codé reçu y'(m,k), un amplificateur de gain $1-\beta$ 72 délivrant le produit $(1-\beta).y'^2(m-1,k)$, un circuit sommateur 74 délivrant l'entité E(m,k) et une boucle formée par une cellule de retard 80 et un amplificateur 81 de gain $\beta$ délivrant à une deuxième entrée de sommation du sommateur 74 le produit $\beta.E(m-1,k)$ à ce circuit sommateur. On notera que les cellules de calcul c4, c5, c6 et c7 permettent alors de délivrer respectivement les coefficients de prédiction $a_0(m,k)$, $a_1(m,k)$, $a_2(m,k)$ et $a_3(m,k)$.

On notera que le circuit représenté en figure 4b correspond à un circuit pour un coefficient de transformée y'(m,k). Dans le cas ou M coefficients codés sont retenus pour réaliser la prédiction, ainsi que déjà mentionné précédemment dans la description, il est nécessaire de prévoir M circuits tels que représentés en figure 4b. Dans un tel cas, le circuit 122 d'adaptation des coefficients de prédiction comprend alors M circuits tels que représentés en figure 4b et fonctionnant en parallèle de façon indépendante.

En ce qui concerne la sélection des coefficients à prédire, c'est à dire en fait en ce qui concerne le choix des M coefficients codés reçus y'(m,k) à prédire, ceux-ci peuvent être sélectionnés à l'aide de critères énergétiques ainsi que mentionné précédemment. Ainsi, à titre d'exemple non limitatif, il est possible de retenir les M premiers coefficients codés reçus y'(m,k) selon l'ordre décroissant des énergies estimées E(m,k) calculées à l'aide de la relation précédemment mentionnée.

On notera que le nombre M est alors fixé compte tenu des impératifs de précision souhaités et bien entendu des capacités de mémoire dont on dispose et de la puissance de calcul installée pour effectuer le masquage d'erreurs.

On notera alors que sur un tel critère d'énergie l'énergie de chaque coefficient codé reçu doit être calculée pour chaque bloc de rang m.

Des précautions doivent cependant être prises en ce qui concerne l'adaptation des coefficients de prédiction $a_q$ (m-q,k) correspondants lors de variations brusques du signal, lors d'attaque d'instruments à corde par exemple. Il convient dans ce cas de réinitialiser les coefficients de prédiction $a_q$, par exemple en les positionnant à la valeur 0, et de forcer la valeur de la constante $\alpha$ à une valeur plus élevée pour accélérer l'adaptation des coefficients de prédiction précités. A titre d'exemple non limitatif, sur les 8 blocs qui suivent la non stationarité provoquée par l'attaque précédemment mentionnée par exemple, on pourra prendre $\alpha = 0,5$ et revenir ensuite à la valeur préconisée précédemment $\alpha = 0,1$.

On notera enfin que la détection des ruptures de stationnarité peut être effectué par un dispositif extérieur non représenté au dessin et pouvant fonctionner par exemple par examen de l'évolution des coefficients codés recus y'(m,k).

Lorsqu'un coefficient de transformée c'est-à-dire un coefficient codé reçu passe de l'état non prédit à l'état prédit, la même modification concernant l'adaptation rapide des coefficients de prédiction doit alors être appliquée.

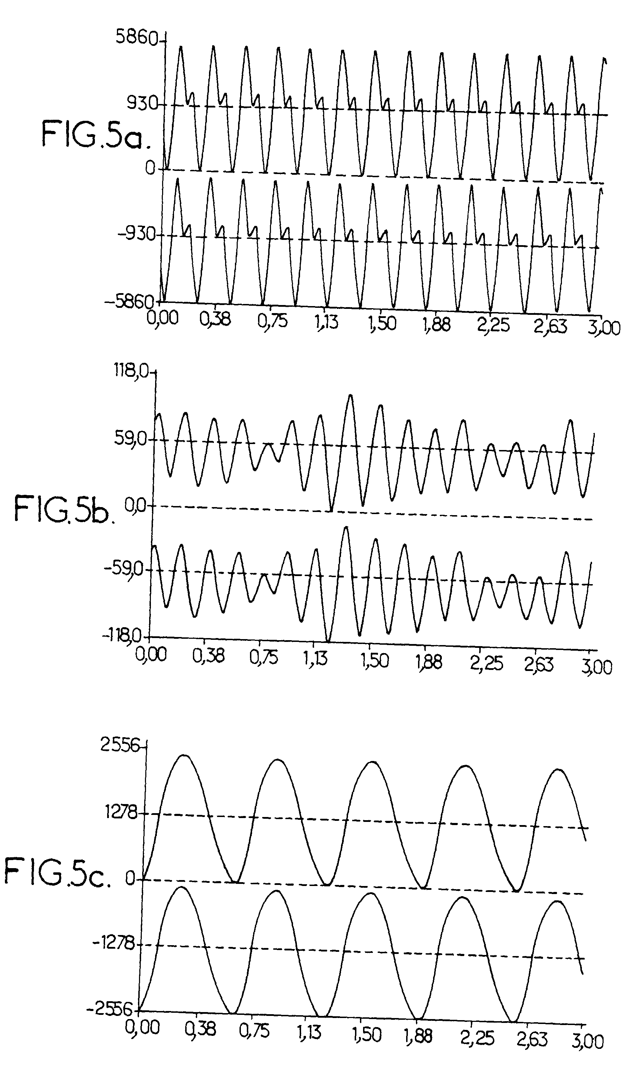

La figure 5 représente quelques formes d'ondes résultant du remplacement des coefficients codés reçus par des coefficients codés prédits. La différence par rapport au signal désiré est faible même pour des signaux complexes tels que représentés en figure 5b.

L'écoute de ces signaux sonores montre qu'en général le procédé et le dispositif objets de la présente invention sont tout à fait satisfaisants au point de vue subjectif. Dans le cas où la fréquence des blocs erronés reste faible, c'est-à-dire estimée inférieure à 1/50, la qualité obtenue du son reproduit est tout à fait acceptable.

Par rapport à la technique proposée par M. Barberis et E. Schroeder dans l'article précédemment mentionné, un avantage majeur du procédé et du dispositif objets de la présente invention est qu'ils peuvent fonctionner en temps réel au niveau du décodeur sans qu'il soit nécessaire de disposer des échantillons sonores situés après le bloc erroné.

Le procédé et le dispositifs objets de la présente invention sont donc particulièrement adaptés aux différents systèmes de codage par transformée fréquentielle.

**Revendications**

1. Procédé de dissimulation d'erreurs de transmission de signaux audio-numériques codés par transformée fréquentielle, ces signaux étant constitués par une suite d'échantillons numériques x(n) et le codage en coefficients codés y(m,k) par domaines de fréquence de rang k effectué par blocs de N échantillons soumis à une pondération h(n), caractérisé en ce que pour chaque bloc de rang m et chaque coefficient codé reçu y'(m,k) correspondant, celui-ci consiste :

   a) à effectuer un traitement par transformée de Fourier discrète TFD de l'ensemble desdits échantillons x(m, n) de chaque bloc de rang m soumis à ladite pondération, par l'intermédiaire des coefficients codés reçus y'(m,k), pour obtenir un coefficient de transformée de Fourier discrète Y'(m,k) dans le domaine de fréquence de rang k correspondant,
   b) à moduler le module dudit coefficient de transformée de Fourier discrète Y'(m,k) par une loi sinusoïdale du temps dont la phase est une fonction linéaire du rang m du bloc, ce qui permet de prédire, pour tout bloc d'échantillons de rang m+1, la valeur des coefficients codés pour déterminer des coefficients codés prédits correspondants $y'_p(m+1,k)$ à partir des blocs de rang antérieur,
   c) à substituer, sur critère de détection d'erreurs, à chaque coefficient codé reçu y'(m+1,k) pour lequel le critère d'erreur est satisfait, ledit coefficient prédit $y'_p(m+1,k)$.

2. Procédé selon la revendication 1, caractérisé en ce que pour un signal x(n) de départ constitué par une pluralité de sinusoïdes, l'étape b) consistant à moduler le module du coefficient de transformée de Fourier discrète Y'(m, k), constant pour tout bloc de rang m, est réalisée à partir desdits coefficients codés reçus y'(m,k) et consiste :

   - à effectuer une mise en quadrature desdits coefficients pour obtenir deux signaux en quadrature

   $$y_1(m,k) = \|Y'(m,k)\| \cos(\Psi(m,k)+\chi)$$

   $$y_2(m,k) = \|Y'(m,k)\| \sin(\psi(m,k)+\chi)$$

   où
   $\|Y'(m,k)\|$ représente le coefficient de transformée de Fourier discrète de y'(m,k), module du coefficient de TFD, Y'(m,k)
   $\psi(m,k)$ l'argument de phase de mise en quadrature $\chi$ la phase de l'étape de mise en quadrature
   - à établir le module et la phase de chaque coefficient Y'(m,k) de TFD à partir des relations :

   $$\|Y'(m,k)\| = \sqrt{y_1^2(m,k) + y_2^2(m,k)}$$

   $$\Psi(m,k) = \text{Arcos}(y'(m,k) / (\|Y'(m,k)\|))$$

   - à établir les valeurs des coefficients codés prédits correspondants à partir des valeurs correspondantes des blocs de rang antérieur, vérifiant la relation

   $$\|Y'_p(m+1,k)\| = 2\|Y'(m,k)\| - \|Y'(m-1,k)\|$$

   $$\Psi_p(m+1,k) = 2\Psi(m,k) - \Psi(m-1,k)$$

   avec

   $$y'_p(m+1,k) = \|Y'_p(m+1,k)\| \cos(\Psi_p(m+1,k)).$$

3. Dispositif de dissimulation d'erreurs de transmission de signaux audio-numériques codés par transformée fréquentielle, ces signaux étant constitués par une suite d'échantillons numériques x(n) et le codage en coefficients codés y(m,k) par domaines de fréquence de rang k étant effectué par blocs de N échantillons soumis à une pondération h(n), caractérisé en ce que ledit dispositif comporte au moins, au niveau du décodeur des coefficients codés transmis, en aval d'un module de détection d'erreurs de transmission et d'un module de décodage des coefficients transmis y'(m,k),

- un moyen (11) de calcul pour tout bloc d'échantillons de rang m+1 à partir des blocs de rang antérieur y'(m, k) des coefficients codés prédits $y'_p(m+1,k)$, ces moyens de calcul (11) comprenant un moyen de calcul (111) du module IIY'(m,k)II et de la phase $\Psi(m,k)$ du coefficient de transformée TFD Y'(m,k) de chaque coefficient codé reçu y'(m,k) et un moyen (112) de modulation du module IIY'(m,k)II dudit coefficient de transformée de Fourier Y'(m,k) par une loi sinusoïdale du temps dont la phase est une fonction linéaire du rang m du bloc d'échantillons, ledit moyen (112) de modulation délivrant lesdits coefficients prédits $y'_p(m+1,k)$ correspondants ;
- des moyens (12) commutateurs conditionnels recevant, d'une part, sur une première entrée de commutation lesdits coefficients codés reçus y'(m,k) et sur une deuxième entrée de commutation lesdits coefficients prédits $y'_p(m+1,k)$ et, d'autre part, sur une entrée de commande de commutation, un signal de commande de commutation délivré par ledit module de détection d'erreurs, ce qui permet de substituer, sur critère de détection d'erreurs, à chaque coefficient y'(m+1,k) pour lequel le critère d'erreur est satisfait, ledit coefficient prédit $y'_p(m+1,k)$.

4. Dispositif selon la revendication 3, caractérisé en ce que ledit moyen (11) de calcul des coefficients codés prédits $y'_p(m+1,k)$ comprend :

- un moyen (110) de mise en quadrature des coefficients y'(m,k) lesdits moyens délivrant un premier $y_1(m,k)$ et un deuxième $y_2(m,k)$ signal en quadrature vérifiant la relation :

$$. \ y_1(m,k) = IIY'(m,k)II \ cos \ (\Psi(m,k)+\chi)$$

$$. \ y_2(m,k) = IIY'(m,k)II \ sin \ (\Psi(m,k)+\chi)$$

où

IIY'(m,k)II       représente le module du coefficient de transformée de Fourier discrète de y'(m,k) module de Y'(m,k),

$\psi(m,k)$       représente l'argument de phase du coefficient de transformée TFD Y'(m,k),

$\chi$       représente la contribution de phase due à l'opération de mise en quadrature,

- des moyens (111) de calcul du module IIY'(m,k)II et de la phase $\Psi(m,k)$ du coefficient de transformée TFD Y'(m,k),
- un circuit (112) de calcul du coefficient codé prédit $y'_p(m+1,k)$ recevant le module IIY'(m,k)II et l'argument de phase $\Psi(m,k)$ du coefficient de transformée Y'(m,k) et délivrant le coefficient codé prédit

$$y'_p(m+1,k) = II(y'_p(m+1,k)II.cos \ \Psi_p(m+1,k)$$

avec

$$IIY'_p(m+1,k)II = 2IIY'(m,k)II - IIY'(m-1,k)II$$

$$\Psi_p(m+1,k) = 2 \ \Psi(m,k) - \Psi(m-1,k).$$

5. Dispositif selon la revendication 4, caractérisé en ce que ledit moyen (110) de mise en quadrature comprend un premier (1101) et un deuxième (1102) filtre en parallèle, chaque filtre formant un filtre passe-tout et délivrant le premier $y_1(m,k)$ respectivement le deuxième $y_2(m,k)$ signal en quadrature.

**6.** Dispositif selon la revendication 3, caractérisé en ce que ledit moyen (11) de calcul des coefficients codés prédits est formé par une boucle de prédiction adaptative des coefficients permettant de prédire, pour tout bloc d'échantillons de rang m+1, la valeur des coefficients codés prédits correspondants $y_p(m+1,k)$ à partir des blocs de rang antérieur y'(m,k).

**7.** Dispositif selon la revendication 6, caractérisé en ce que ladite boucle de prédiction adaptative comporte :

- une pluralité (113, 114, 115, 116) de Q cellules de retard connectées en cascade, la première cellule amont (113) recevant les coefficients codés reçus y'(m,k) et chaque cellule de retard délivrant des coefficients y'(m-1,k), y'(m-2,k), y'(m-3k), y'(m-4,k) de rang antérieur,
- une pluralité (117, 118, 119, 120) de Q circuits multiplicateurs connectés en parallèle, un circuit multiplicateur ayant une entrée connectée à la sortie correspondante d'une cellule de retard et recevant le coefficient y'(m-q) correspondant, une autre entrée de ce circuit multiplicateur recevant une valeur de multiplicante $a_q(m,k)$ correspondante constituant le coefficient de prédiction,
- un circuit sommateur (121) recevant sur Q entrées les produits correspondants $a_q(m,k)$ - y'(m-q,k) et délivrant le coefficient codé prédit

$$y_p(m + 1,k) = \sum_{q = 1}^{Q} a_q (m,k) \cdot y'(m-q,k)$$

- un circuit (122) d'adaptation des coefficients de prédiction $a_q(m,k)$ recevant d'une part les coefficients codés reçus y'(m-k), y'(m-q,k) et d'autre part le coefficient codé prédit $y'_p(m+1,k)$ et délivrant les coefficients de prédiction $a_q(m,k)$ auxdits circuits multiplicateurs, sur critère de gradient normalisé.

## Patentansprüche

**1.** Verfahren zur Verdeckung von Fehlern bei der Übertragung audionumerischer Signale, welche durch frequenzmäßige Transformation codiert sind, wobei diese Signale durch eine Folge numerischer Abtastwerte x(n) gebildet sind und die Codierung in codierte Koeffizienten y(m,k) aus Frequenzbereichen des Rangs k in Blöcken von einer Gewichtung h(n) unterworfenen N Abtastwerten durchgeführt wird,
dadurch gekennzeichnet, daß es für jeden Block des Rangs m und jeden entsprechenden empfangenen codierten Koeffizienten y'(m,k) umfaßt:

a) eine diskrete Fourier-Transformation TFD der Menge der Abtastwerte x(m,n) jedes der Gewichtung unterworfenen Blocks des Rangs m mittels der empfangenen codierten Koeffizienten y'(m,k) auszuführen, um einen durch diskrete Fourier-Transformation erhaltenen Koeffizienten Y'(m,k) im entsprechenden Frequenzbereich des Rangs k zu erhalten,
b) den Betrag des durch diskrete Fourier-Transformation erhaltenen Koeffizienten Y'(m,k) durch eine zeitlich sinusartige Gesetzmäßigkeit zu modulieren, deren Phase eine lineare Funktion des Rangs m des Blocks ist, was es ermöglicht, für jeden Block von Abtastwerten des Rangs m+1 den Wert der codierten Koeffizienten vorherzusagen, um aus den Blöcken des vorangehenden Rangs die entsprechenden vorhergesagten codierten Koeffizienten $y'_p(m+1,k)$ zu bestimmen,
c) nach Maßgabe von Fehlererfassungskriterien jeden empfangenen codierten Koeffizienten y'(m+1,k), für den das Fehlerkriterium erfüllt ist, durch den vorhergesagten Koeffizienten $y'_p(m+1,k)$ zu ersetzen.

**2.** Verfahren nach Anspruch 1, dadurch gekennzeichnet, daß für ein Ausgangssignal x(n), welches aus einer Mehrzahl Sinuswellen gebildet ist, der Schritt b), welcher das Modulieren des Betrags des durch diskrete Fourier-Transformation erhaltenen Koeffizienten Y'(m,k) umfaßt, und zwar gleichmäßig für jeden Block des Rangs m, ausgehend von den empfangenen codierten Koeffizienten y'(m,k) ausgeführt wird und umfaßt:

- eine 90°-Phasenverschiebung der Koeffizienten auszuführen, um zwei um 90° phasenverschobene Signale

$$y_1(m,k) = \|Y'(m,k)\| \cos (\Psi(m,k)+\chi)$$

$$y_2(m,k) = \|Y'(m,k)\| \sin (\Psi(m,k)+\chi)$$

zu erhalten, wobei

$\|Y'(m,k)\|$ den Betrag des durch diskrete Fourier-Transformation von $y'(m,k)$ erhaltenen Koeffizienten, den Betrag des TFD-Koeffizienten, $Y'(m,k)$, darstellt,
$\Psi(m,k)$ das Argument der Phase bei der 90°-Phasenverschiebung ist und
$\chi$ die Phase bei dem Schritt der 90°-Phasenverschiebung ist,

- den Betrag und die Phase jedes Koeffizienten $Y'(m,k)$ der TFD aus den Beziehungen

$$\|Y'(m,k)\| = \sqrt{y_1^{2}(m,k) + y_2^{2}(m,k)}$$

$$\Psi(m,k) = \text{Arcos}\,(y'(m,k) / (\|Y'(m,k)\|))$$

zu bilden,
- aus den entsprechenden Werten der Blöcke vorangehenden Rangs die Werte der entsprechenden vorhergesagten codierten Koeffizienten zu bilden, welche die Beziehung

$$\|Y'_p(m+1,k)\| = 2\|Y'(m,k)\| - \|Y'(m-1,k)\|$$

$$\Psi_p(m+1,k) = 2\Psi(m,k) - \Psi(m-1,k)$$

mit

$$y'_p(m+1,k) = \|Y'_p(m+1,k)\| \cos(\Psi_p(m+1,k)).$$

erfüllen.

3. Vorrichtung zur Verdeckung von Fehlern bei der Übertragung audionumerischer Signale, welche durch frequenzmäßige Transformation codiert sind, wobei diese Signale durch eine Folge numerischer Abtastwerte $x(n)$ gebildet sind und die Codierung in codierte Koeffizienten $y(m,k)$ aus Frequenzbereichen des Rangs k in Blöcken von einer Gewichtung $h(n)$ unterworfenen N Abtastwerten durchgeführt wird,
dadurch gekennzeichnet, daß die Vorrichtung auf Seiten des Decoders der übertragenen codierten Koeffizienten, einem Modul zur Erfassung von Fehlern bei der Übertragung und einem Modul zur Decodierung der übertragenen Koeffizienten $y'(m,k)$ nachfolgend, wenigstens umfaßt:

- ein Mittel (11) zur Berechnung von vorhergesagten codierten Koeffizienten $y'_p(m+1,k)$ für jeden Block von Abtastwerten des Rangs m+1 aus Blöcken vorangehenden Rangs $y'(m,k)$, wobei dieses Berechnungsmittel (11) ein Mittel (111) zur Berechnung des Betrags $\|Y'(m,k)\|$ und der Phase $\Psi(m,k)$ des TFD-transformierten Koeffizienten $Y'(m,k)$ jedes empfangenen codierten Koeffizienten $y'(m,k)$ und ein Mittel (112) zur Modulation des Betrags $\|Y'(m,k)\|$ des Fourier-transformierten Koeffizienten $Y'(m,k)$ durch eine zeitlich sinusartige Gesetzmäßigkeit umfaßt, deren Phase eine lineare Funktion des Rangs m des Blocks von Abtastwerten ist, wobei das Mittel (112) zur Modulation die entsprechenden vorhergesagten Koeffizienten $y'_p(m+1,k)$ liefert,
- ein Mittel (12) zum bedingten Schalten, welches einerseits an einem ersten Schalteingang die empfangenen codierten Koeffizienten $y'(m,k)$ und an einem zweiten Schalteingang die vorhergesagten Koeffizienten $y'_p(m+1,k)$ und andererseits an einem Schaltsteuereingang ein Schaltsteuersignal empfängt, welches von dem Fehlererfassungsmodul ausgegeben wird, was es erlaubt, nach Maßgabe eines Fehlererfassungskriteriums jeden Koeffizienten $y'(m+1,k)$, für welchen das Fehlerkriterium erfüllt ist, durch den vorhergesagten Koeffizienten $Y'_p(m+1,k)$ zu ersetzen.

4. Vorrichtung nach Anspruch 3, dadurch gekennzeichnet, daß das Mittel (11) zum Berechnen der vorhergesagten

codierten Koeffizienten $y'_p(m+1,k)$ umfaßt:

- ein Mittel (110) zur 90°-Phasenverschiebung der Koeffizienten $y'(m,k)$, wobei dieses Mittel ein erstes $y_1(m,k)$ und ein zweites $y_2(m,k)$ Signal mit 90° Phasenverschiebung liefert, welche die Beziehung

$$. y_1(m,k) = \|Y'(m,k)\| \cos (\Psi(m,k)+\chi)$$

$$. y_2(m,k) = \|Y'(m,k)\| \sin (\Psi(m,k)+\chi)$$

erfüllen, wobei

$\|Y'(m,k)\|$ den Betrag des durch diskrete Fourier-Transformation von $y'(m,k)$ erhaltenen Koeffizienten, den Betrag von $Y'(m,k)$, darstellt,
$\Psi(m,k)$ das Argument der Phase des TFD-transfor mierten Koeffizienten $Y'(m,k)$ darstellt,
$\chi$ den durch die Durchführung der 90°-Phasenverschiebung bedingten Phasenbeitrag darstellt,

- Mittel (111) zum Berechnen des Betrags $\|Y'(m,k)\|$ und der Phase $\Psi(m,k)$ des durch TFD-Transformation erhaltenen Koeffizienten $Y'(m,k)$,
- einen Schaltkreis (112) zur Berechnung des vorhergesagten codierten Koeffizienten $y'_p(m+1,k)$, welcher den Betrag $\|Y'(m,k)\|$ und das Phasenargument $\Psi(m,k)$ des durch Transformation erhaltenen Koeffizienten $Y'(m,k)$ empfängt und den vorhergesagten kodierten Koeffizienten

$$Y'_p(m+1,k) = \left\|Y'_p(m+1,k)\right\| .\cos \Psi_p(m+1,k)$$

mit

$$\|Y'_p(m+1,k)\| = 2\|Y'(m,k)\| - \|Y'(m-1,k)\|$$

$$\Psi_p(m+1,k) = 2 \Psi(m,k) - \Psi(m-1,k).$$

liefert.

5. Vorrichtung nach Anspruch 4, dadurch gekennzeichnet, daß das Mittel (110) zur 90°-Phasenverschiebung parallel zueinander ein erstes (1101) und ein zweites (1102) Filter umfaßt, wobei jedes Filter ein Durchlaßfilter bildet und das erste $y_1(m,k)$ bzw. das zweite $y_2(m,k)$ Signal mit 90° Phasenverschiebung liefert.

6. Vorrichtung nach Anspruch 3, dadurch gekennzeichnet, daß das Mittel (11) zum Berechnen der vorhergesagten codierten Koeffizienten aus einer Schleife zur adaptiven Vorhersage der Koeffizienten gebildet ist, was es ermöglicht, für jeden Block von Abtastwerten des Rangs m+1 den Wert der entsprechenden vorhergesagten codierten Koeffizienten $y_p(m+1,k)$ aus den Blöcken vorangehenden Rangs $y'(m,k)$ vorherzusagen.

7. Vorrichtung nach Anspruch 6, dadurch gekennzeichnet, daß die Schleife zur adaptiven Vorhersage umfaßt:

- eine Mehrzahl (113, 114, 115, 116) von Q Verzögerungszellen, welche kaskadenartig verbunden sind, wobei die erste vorangehende Zelle (113) die empfangenen codierten Koeffizienten $y'(m,k)$ empfängt und jede Verzögerungszelle die Koeffizienten $y'(m-1,k)$, $y'(m-2,k)$, $y'(m-3k)$, $y'(m-4,k)$ vorangehenden Rangs liefert,
- eine Mehrzahl (117, 118, 119, 120) von Q parallelgeschalteten Multiplikationsschaltkreisen, wobei ein Multiplikationsschaltkreis mit einem Eingang an den entsprechenden Ausgang einer Verzögerungszelle angeschlossen ist und den entsprechenden Koeffizienten $y'(m-q)$ empfängt, und ein weiterer Eingang dieses Multiplikationsschaltkreises einen entsprechenden den Vorhersagekoeffizienten bildenden Multiplikationswert $a_q(m,k)$ empfängt,
- einen Summationsschaltkreis (121), welcher an Q Eingängen die entsprechenden Produkte $a_q(m,k) - y'(m-q,k)$ empfängt und die vorhergesagten codierten Koeffizienten

$$y_P(m+1,k) = \sum_{q=1}^{Q} a_q(m,k) \cdot y'(m-q,k)$$

liefert,

- ein Schaltkreis (122) zum Anpassen der Vorhersagekoeffizienten $a_q(m,k)$, welcher einerseits die empfangenen codierten Koeffizienten $y'(m-k)$, $y'(m-q,k)$ und andererseits den vorhergesagten codierten Koeffizienten $y'_p(m+1,k)$ empfängt und die Vorhersagekoeffizienten $a_q(m,k)$ entsprechend einem normierten Gradientenkriterium an die Multiplikatorschaltkreise liefert.

**Claims**

1. A process for concealing transmission errors of audio-digital signals coded by frequency transform, the signals consisting of a sequence of digital samples $x(n)$ and the coding into coefficients $y(m,k)$ coded by frequency domains of rank k effected by blocks of N samples subjected to a weighting $h(n)$, characterised in that for each block of rank m and each corresponding received coded coefficient $y'(m,k)$ the process consists of:

    a) subjecting to a discrete Fourier transform DFT processing all the samples $x(m,n)$ of each block of rank m subjected to the weighting by way of the received coded coefficients $y'(m,k)$ to obtain a DFT coefficient $Y'(m,k)$ in the corresponding frequency domain of rank k;

    b) modulating the module of the DFT coefficient $Y'(m,k)$ by a law which is sinusoidal in time and whose phase is a linear function of the rank m of the block, so that the value of the coded coefficients can be predicted for any sample block of rank m+1 in order to determine corresponding predicted coded coefficients $y'_p(m+1,k)$ from blocks of a previous rank, and

    c) substituting in accordance with an error detection criterion the predicted coefficient $y'_p(m+1,k)$ for each received coded coefficient $y'(m+1,k)$ which meets the error criterion.

2. A process according to claim 1,
   characterised in that for a starting signal $x(n)$ consisting of a number of sinusoidals, step b), consisting of modulating the module of the DFT coefficient $Y'(m,k)$, which is constant for any block of rank m, is effected on the basis of the received coded coefficients $y'(m,k)$ and consists of:

    - squaring the coefficients to obtain two squared signals

    $$y_1(m,k) = \|Y'(m,k)\| \cos(\Psi(m,k)+\chi)$$

    $$y_2(m,k) = \|Y'(m,k)\| \sin(\Psi(m,k)+\chi)$$

    where

    $\|Y'(m,k)\|$ represents the DFT coefficient of $y'(m,k)$, the module of the DFT coefficient $Y'(m,k)$;

    $\Psi(m,k)$ represents the phase argument of squaring;

    $\chi$ represents the phase of the squaring step;

    - establishing the module and the phase of each DFT coefficient $Y'(m,k)$ from equations:

    $$\|Y'(m,k)\| = \sqrt{y_1^2(m,k) + y_2^2(m,k)}$$

15

$$\Psi(m,k) = \text{Arcos}\ (y'(m,k)\ /\ (\|Y'(m,k)\|))$$

- and establishing the values of the corresponding predicted coded coefficients from the corresponding values of the blocks of previous rank verifying the equation

$$\left\|Y'_p(m+1,k)\right\| = 2\|Y'(m,k)\| - \|Y'(m-1,k)\|$$

$$\Psi_p(m+1,k) = 2\Psi(m,k) - \Psi(m-1,k)$$

with

$$y'_p(m+1,k) = \left\|Y'_p(m+1,k)\right\|\ \cos(\Psi_p(m+1,k)).$$

3. A system for concealing transmission errors of audio-digital signals coded by frequency transform, the signals consisting of a sequence of digital samples $x(n)$ and the coding into coefficients $y(m,k)$ being coded by frequency domains of rank k effected by blocks of N samples subjected to a weighting $h(n)$, characterised in that the system comprises at least in the decoder of the transmitted coded coefficients downstream of a transmission error detection module and a transmitted coefficient $y'(m,k)$ decoding module:

- means (11) for calculating predicted coded coefficients $y'_p(m+1,k)$ for any sample block of rank m+1 from the blocks of previous rank $y'(m,k)$, the calculating means (11) comprising means (111) for calculating the module $\|Y'(m,k)\|$ and the phase $\Psi(m,k)$ of the DFT coefficient $Y'(m,k)$ of each received coded coefficient $y'(m,k)$ and means (112) for modulating the module $\|Y'(m,k)\|$ of the DFT coefficient $Y'(m,k)$ by a law which is sinusoidal in time and whose phase is a linear function of the rank m of the sample block, the modulation means (112) outputting the corresponding predicted coefficients $y'_p(m+1,k)$,

and

- conditional switching means (12) receiving the received coded coefficients $y'(m,k)$ at a first switching input, the predicted coefficients $y'_p(m+1,k)$ at a second switching input, and, at a switching control input, a switching control signal output by the error detection module, so that the predicted coefficient $y'_p(m+1,k)$ can be substituted in accordance with an error detection criterion for each coefficient $y'(m+1,k)$ for which the error criterion is satisfied.

4. A system according to claim 3,
   characterised in that the means (11) for calculating the predicted coded coefficient $y'_p(m+1,k)$ comprises:

- means (110) for squaring the coefficients $y'(m,k)$ and delivering a first squared signal $y_1(m,k)$ and a second squared signal $y_2(m,k)$ verifying the relationship:

$$.\ y_1(m,k) = \|Y'(m,k)\|\ \cos\ (\Psi(m,k)+\chi)$$

$$.\ y_2(m,k) = \|Y'(m,k)\|\ \sin\ (\Psi(m,k)+\chi)$$

where

$\|Y'(m,k)\|$ represents the module of the DFT coefficient of $y'(m,k)$, the module of $Y'(m,k)$;

$\Psi(m,k)$ represents the phase argument of the DFT coefficient $Y'(m,k)$, and

$\chi$ represents the phase contribution due to the squaring operation;

- means (111) for calculating the module llY'(m,k)ll and the phase $\Psi(m,k)$ of the DFT coefficient Y'(m,k), and a circuit (112) for calculating the predicted coded coefficient $y'_p(m+1,k)$ and receiving the module llY'(m,k)ll and the phase argument $\Psi(m,k)$ of the DFT coefficient Y'(m,k) and delivering the predicted coded coefficient

$$y'_p(m+1,k) = \left\| Y'_p(m+1,k) \right\| . \cos \Psi_p(m+1,k)$$

with

$$\| Y'_p(m+1,k) \| = 2\| Y'(m,k)\| - \| Y'(m-1,k)\|$$

$$\Psi_p(m+1,k) = 2\,\Psi(m,k) - \Psi(m-1,k).$$

5. A system according to claim 4,
characterised in that the squaring means (110) comprises a first filter (1101) and a second filter (1102) in parallel with one another, each filter forming a wide-band filter and respectively outputting the first squared signal $y_1(m,k)$ and the second squared signal $y_2(m,k)$.

6. A system according to claim 3,
characterised in that the means (11) for calculating the predicted coded coefficients consists of an adaptive prediction loop of the coefficients enabling the value of the corresponding predicted coded coefficients $Y_p(m+1,k)$ to be predicted for any sample block of rank m+1 from blocks of a previous rank y'(m,k).

7. A system according to claim 6,
characterised in that the adaptive prediction loop comprises:

- a number (113, 114, 115, 116) of Q cascaded delay cells, the first upstream cell (113) receiving the received coded coefficients y'(m,k) and each delay cell outputting coefficients y'(m-1,k), y'(m-2,k), y'(m-3k), y'(m-4,k) of previous rank;

- a number (117, 118, 119, 120) of Q parallel-connected multiplier circuits, a multiplier circuit having one input connected to the corresponding output of a delay cell and receiving the corresponding coefficient y'(m-q), another input of the latter multiplier circuit receiving a corresponding multiplier value $a_q(m,k)$ forming the prediction coefficient;

- an adder circuit (121) receiving corresponding products $a_q(m,k)$ - y'(m-q,k) at Q inputs and delivering the predicted coded coefficient

$$Y_p(m + 1,k) = \sum_{q = 1}^{Q} a_q(m,k) . y'(m-q,k)$$

- a circuit (122) for adapting the prediction coefficients $a_q(m,k)$ and receiving the received coded coefficients y'(m-k), y'(m-q,k) and the predicted coefficient $y'_p(m+1,k)$ and outputting the prediction coefficients $a_q(m,k)$ to the multiplier circuits in accordance with a standardised gradient criterion.

FIG.1a.

FIG.1e.

FIG.1b.

FIG.1c.

FIG.1d.

FIG. 2.

**FIG.3a.**

- 11
- 110
- 1101 FILTRE h1(m)
- 1102 FILTRE h2(m)
- $y'(m,k)$
- $y_1(m,k)$
- $y_2(m,k)$
- 111
- 1111 CALCUL DU CARRÉ $(-)^2$
- 1112 CALCUL DU CARRÉ $(-)^2$
- 1113
- 1114 CALCUL DE LA RACINE $\sqrt{(-)}$
- $\|Y'(m,k)\|$
- 1120 X2
- 1122
- $\|Y'_p(m+1,k)\|$
- 1121 $z^{-1}$
- 112
- 1127
- $y'_p(m+1,k)$
- 1115 CALCUL DE L'INVERSE
- 1116
- 1117 Arcos(-)
- $\psi(m,k)$
- 1123 X2
- 1125
- 1126 cos(-)
- 1124 $z^{-1}$
- $\psi_p(m+1,k)$

DISPOSITIF DE MISE EN QUADRATURE

DISPOSITIF D'EXTRACTION DU MODULE ET DE LA PHASE

DISPOSITIF DE PRÉDICTION

**FIG.3b.**

- 1101 ou 1102
- 51 $z^{-1}$
- $y'(m_{-1},k)$
- $c_1$
- 50
- 52
- 53 $P_1(m,k)$
- 54
- 55 $z^{-1}$
- a1
- $y'(m,k)$
- $c_2$
- 56 57 58
- $P_2(m,k)$
- a2
- $z^{-1}$
- $c_3$
- 61 62 63
- $y_1(m,k)$
- a3
- 64
- 65 $z^{-1}$

FIG.4a.

$$y_p^2(m,k) = \sum_{q=1}^{Q} aq(m,k) \cdot y'(m-q,k)$$

FIG.4b.

FIG.5a.

FIG.5b.

FIG.5c.